# EUROPEAN PATENT APPLICATION

(11) **EP 1 384 989 A1**
(43) Date of publication of application: **28.01.2004**
(21) Application number: 03016820.7
(22) Date of filing: 23.07.2003
(51) Int. Cl.: G01N 21/55

(54) **Method and device for detecting fluorescence**

(30) Priority: 26.07.2002 JP 2002217777
(71) Applicant: Shimadzu Corporation, Kyoto 604-8511 (JP)
(72) Inventor: Takubo, Kenji, Nishinokyo, Nakagyo-ku, Kyoto 604-8511 (JP); Nakanura, Shin, Nishinokyo, Nakagyo-ku, Kyoto 604-8511 (JP)
(74) Representative: Schoppe, Fritz, Dipl.-Ing.

(57) **Abstract**

A silver thin film (2) and an SiO₂ film (7) are deposited in this order on one side surface of a slide glass (1) by ion beam sputtering deposition, so that a supporting substrate for sample solution is formed. A sample solution (3) containing fluorescence molecules (5) is placed on the SiO₂ film (7) of the supporting substrate and a cover glass (8) is placed on the sample solution (3). When light is entered upon the interface between the slide glass (1) and the SiO₂ film (7), surface plasmon resonance is excited at the interface and thus an evanescent field is reinforced, so that fluorescence is generated efficiently from the fluorescence molecules (5) contained in the sample solution (3).

## Description

### BACKGROUND OF THE INVENTION

### Field of the Invention

The present invention relates to a fluorescence detection method which is used mainly in the field of biochemistry, and to a total internal reflection fluorescence microscope (TIRFM) and a biomolecule detection device utilizing such fluorescence detection method.

### Description of the Related Art

A total internal reflection fluorescence microscope is a kind of darkfield illumination microscope that performs illumination by using an evanescent field formed in a vicinity of the interface between a layer of a sample to be observed and a glass (a slide glass or a cover glass) by totally reflecting incident light at the interface. The total internal reflection fluorescence microscope is used mainly in the field of biochemistry to observe fluorescence of biomolecules.

The total internal reflection fluorescence microscope is usually required to have a high detection sensitivity because it is used in order to observe fluorescence of a single molecule. For this reason, in conventional total internal reflection fluorescence microscopes, a strong laser light source must be used as a light source, and a camera with high sensitivity (ICCD (image intensifier CCD)) or a photo-multiplier tube (PMT) must be used as a detector.

Because such strong laser light source and camera with high sensitivity are expensive and large structural components, a total internal reflection fluorescence microscope also becomes expensive and large.

### SUMMARY OF THE INVENTION

An object of the present invention is to realize a fluorescence detection device such as a total internal reflection fluorescence microscope and a fluorescence detection method without using a strong laser light source and a high sensitivity camera

In accordance with the present invention, there is provided a fluorescence detection method in which a sample solution containing fluorescence molecules is in contact with a substrate, light is entered at an incident angle within the range of allowing total reflection at the interface between the substrate and the sample solution, and fluorescence generated from the fluorescence molecules excited by an evanescent field generated in a vicinity of the interface is detected, wherein a substrate with a laminated structure of a dielectric base material layer, a metallic thin film layer and a dielectric coating layer is used for the substrate so that the dielectric coating layer contacts the sample solution, and the light is entered at a specific incident angle which enables excitation of surface plasmon resonance at the interface between the metallic thin film layer and the dielectric coating layer.

A fluorescence detection device of the present invention for realizing the fluorescence detection method comprises a substrate which comes into contact with a sample solution containing fluorescence molecules; illumination means for entering light at an incident angle within the range of allowing total reflection at the interface between the substrate and the sample solution; and detection means for detecting fluorescence generated from the fluorescence molecules excited by an evanescent field generated in a vicinity of the interface. The substrate has a laminated structure of a dielectric base material layer, a metallic thin film layer and a dielectric coating layer in which the dielectric coating layer contacts the sample solution. The illumination means is set to make light enter at a specific incident angle which enables excitation of surface plasmon resonance at the interface between the metallic thin film layer and the dielectric coating layer.

Surface plasmon resonance refers to as a phenomenon that plasma oscillation (surface plasmon) of electrons near the surface of a metal contacting a dielectric (including a vacuum, a gas and a liquid) resonates with respect to an alternating electric field of light entered from outside. This resonance effect reinforces the energy density (square of electric field intensity) of an evanescent field near the surface ten times or more as compared with the case that a metallic thin film is not provided.

Light is entered on the interface between a substrate and a sample solution layer at an incident angle within the specific range, surface plasmon resonance is excited at the interface and thus an evanescent field is reinforced. As a result, the efficiency of generating fluorescence is increased. Thus, fluorescence can be detected without using strong laser light sources and cameras with high sensitivities.

The present invention does not exclude use of light sources with large outputs such as strong laser light sources as illumination means. Use of such illumination means with high output is more preferable because the strength of fluorescence is increased In accordance with the present invention, however, the efficiency of generating fluorescence is increased by reinforcing an evanescent field Thus, inexpensive light sources including a semiconductor laser and a light emitting diode can be used as an excitation light source. As a result, costs of a device can be reduced.

Also regarding a detector, the present invention does not exclude use of cameras with high sensitivities. Use of such detector with high sensitivity is more preferable because the sensitivity of detecting fluorescence is enhanced In accordance with the present invention, however, the efficiency of generating fluorescence is increased by reinforcing the evanescent field Accordingly, inexpensive detectors including a CCD (charge coupled device) and a photodiode can be used As a result, the costs of device can be reduced

When a semiconductor laser or a light emitting diode is used as an excitation light source, and a CCD or a photodiode is used as a detector, a compact device can be realized

The fluorescence detection device of the present invention is suitable for applied to a total internal reflection fluorescence microscope or a biomolecule detection device. The wavelength ranges for light used for excited light and fluorescence are not especially limited and any wavelength range such as ultraviolet, visible and infrared may be applied as long as it generates fluorescence.

As described above, in accordance with a fluorescence detection method of the present invention, a substrate with a laminated structure of a dielectric base material layer, a metallic thin film layer and a dielectric coating layer is used as a substrate for supporting a sample solution, and the dielectric coating layer contacts the sample solution. Light is entered at a specific incident angle which enables excitation of surface plasmon resonance at the interface between the metallic thin film layer and the dielectric coating layer. Thus, an evanescent field can be reinforced and the efficiency of generating fluorescence is increased

Accordingly, a device can be formed by inexpensive and compact illumination means such as a semiconductor laser or a light emitting diode. Furthemorer, not expensive detection means such as an ICCD or a PMT but inexpensive and compact detection means such as an ordinary CCD or a photodiode can be used

### BRIEF DESCRIPTION OF THE DRAWINGS

Fig. 1 is a cross-sectional view of the main portion illustrating a representative method for exciting surface plasmon resonance (Kretschmann arrangement);
Fig. 2 is a cross-sectional view of the main portion illustrating a first embodiment;
Figs. 3(A) and 3(B) are graphs illustrating dependency of energy density upon incident angle and dependency of energy reflectance upon incident angle on the surface, in accordance with the first embodiment;

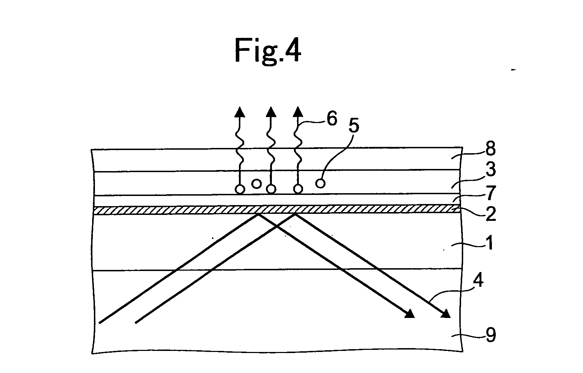

Fig. 4 is a cross-sectional view of the main portion illustrating a second embodiment; and
Figs. 5(A) and 5(B) are graphs illustrating dependency of energy density upon incident angle and dependency of energy reflectance upon incident angle on the surface, in accordance with the second embodiment

### DESCRIPTION OF THE PREFERRED EMBODIMENTS

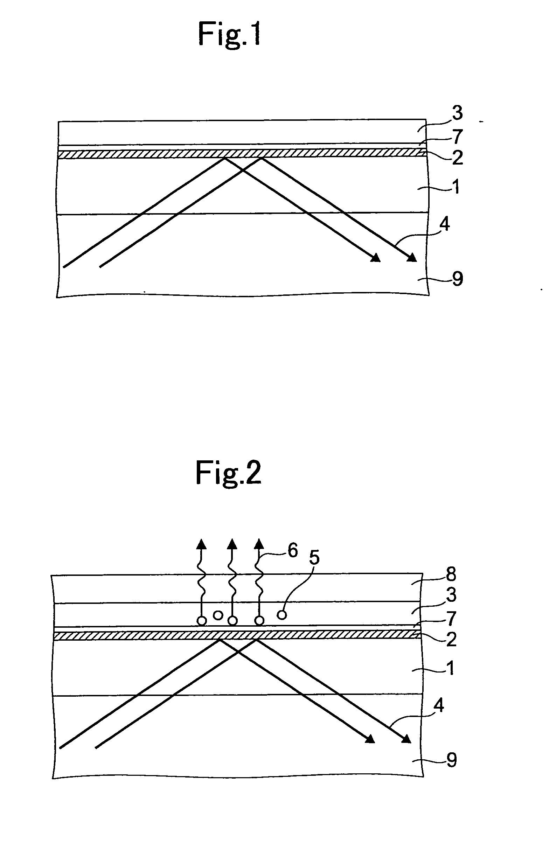

Kretschmann arrangement shown in Fig. 1 is the most common and famous arrangement among optical arrangements for exciting surface plasmon resonance. In accordance with the Kretschmann arrangement, a dielectric base material layer 1 such as a glass contacts via a metallic thin film 2 a second dielectric (aqueous solution or air) 3 with smaller dielectric constant than the dielectric base material layer 1. The reference numeral 9 indicates an index-matching medium or a prism.

When light 4 enters the Kretschmann arrangement, surface plasmon resonance is excited at a specific incident angle which is larger than a total internal reflection critical angle obtained when the metallic thin film 2 is not provided. Because excitation of the surface plasmon resonance drastically reduces a strength of reflection light, conditions for resonance can be confirmed by monitoring the strength of reflection light Although materials with high conductivities including silver, gold and copper are usually preferable for the metallic thin film 2, the present invention is not limited to such materials. An energy density reinforcement effect for the surface plasmon resonance may be decreased depending on a wavelength of incident light because absorption of metals caused by transition of electrons thereof becomes significant Thus, such drawback must be prevented From this point of view, silver is considered to be most appropriate material because it has small absorption in a wide visible wavelength range. An appropriate thickness of the metallic thin film 2 is usually 10 to 100 nm.

The Kretschmann arrangement may be applied to a total internal reflection fluorescence microscope, and surface plasmon resonance may be excited in a structure that a sample solution serving as the dielectric 3 directly contacts the metallic thin film 2 formed on the dielectric base material layer 1 such as a cover glass or a slide glass. Nevertheless, problems may occur as follows.

### 1) Chemical instability of metallic thin film

Silver and copper may contact air before observation, resulting in oxidation thereof. Such metals may react with a solution depending on types of the solution sample.

### 2) If fluorescence molecules are adjacent to a metal at a distance of a few nm or shorter, fluorescence resonance energy transfer (FRET) may occur and thus fluorescence cannot be observed

The present invention is developed in order to solve the above-described problems by providing a dielectric coating layer on the metallic thin film 2 formed on the dielectric base material layer 1.

### (First Embodiment)

In accordance with one embodiment, as shown in Fig. 2, a silver thin film (with a thickness of 50 nm) 2 serving as a metallic thin film and an SiO₂ film (with a thickness of 10 nm) 7 serving as a dielectric coating layer are deposited in this order by ion beam sputtering deposition on one side surface of a commercially available slide glass (BK7) 1 serving as a dielectric base material layer. Then, the resultant member is used as a supporting substrate for sample solution.

A sample solution 3 is placed on the SiO₂ film 7 of the supporting substrate, and a cover glass 8 is placed on the sample solution 3. The sample solution 3 contains fluorescence molecules 5.

The silver thin film 2 and the SiO₂ film 7 may be deposited on the cover glass 8 instead of the slide glass 1.

Surfaces of the silver thin film 2 and the SiO₂ film 7 are desirably smooth in order to suppress direct scattering light of incident light which becomes background light upon observation. Specifically, the surfaces have a root mean square roughness of 2 nm or less. ion beam sputtering deposition is appropriate as the method for obtaining such thin films, but the present invention is not limited to the deposition.

Instead of silver, other types of metals such as gold or copper may be used for the metallic thin film 2.

Various types of film-forming methods may be performed in order to form the SiO₂ film 7. In view of preventing oxidation of the silver thin film 2, an SiO₂ film is desirably formed after a silver thin film is formed within the same film-forming apparatus.

Instead of SiO₂, inorganic dielectric materials including TiO₂ and Al₂O₃ or organic transparent dielectric materials may be used as materials for the dielectric coating layer 7.

The sample solution 3 is placed on the SiO₂ film 7 of the supporting substrate and the cover glass 8 is placed on the sample solution 3. Under this state, light enters from the rear surface side of the supporting substrate within the range of incident angle that total reflection occurs at the interface between the substrate and the sample solution 3. Then, fluorescence 6 generates from the fluorescence molecules 5 excited by an evanescent field generated in a vicinity of the interface.

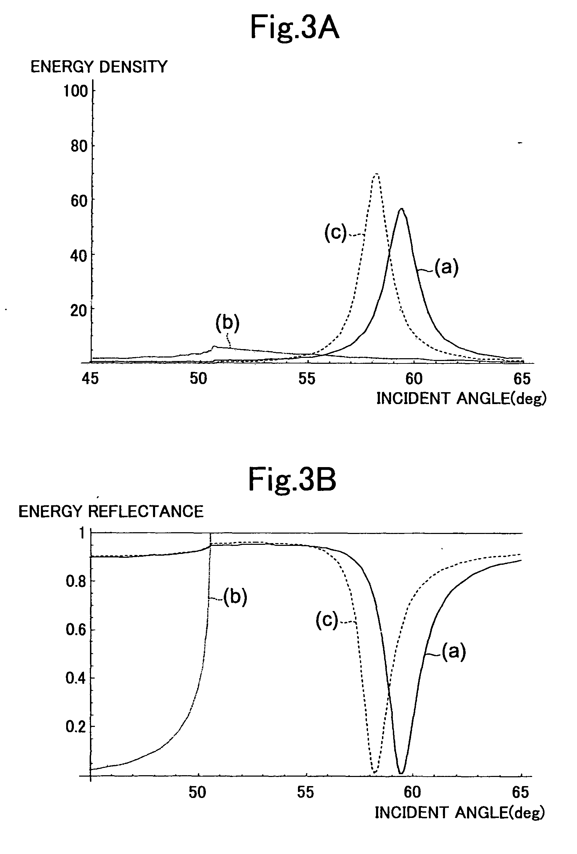

Fig. 3 shows the calculated result (A) of dependency of energy density upon incident angle and the calculated result (B) of dependency of energy reflectance upon incident angle on the surface of the slide glass 1 when laser light with a wavelength of 488 nm enters a system that the slide glass 1 relating to this embodiment contacts the sample solution 3 with a refractive index of 1.35. The incident angle refers to as an angle formed with the normal of the surface of the slide glass 1.

In the respective graphs, the reference character (a) indicates the result of this embodiment For the purpose of comparison, the calculated result (b) in the case of ordinary total internal reflection illumination microscope without a silver thin film and the calculated result (c) in the case of Kretschmann arrangement without an SiO₂ film are also shown. An energy density reinforcement effect caused by surface plasmon can be seen from (a) indicating this embodiment Nevertheless, it is found that the energy density is decreased as compared with the case that an SiO₂ film is not provided

In accordance with the present invention, "a specific incident angle that enables excitation of surface plasmon resonance at the interface between a metallic thin film layer and a dielectric coating layer" is, in this embodiment, in the range of 59 to 60° in which the energy density reinforcement effect can be found referring to Figs. 3(A) and 3(B).

### (Second Embodiment)

In accordance with a second embodiment, the thickness of the SiO₂ film 7 relating to the first embodiment is changed to 500 nm.

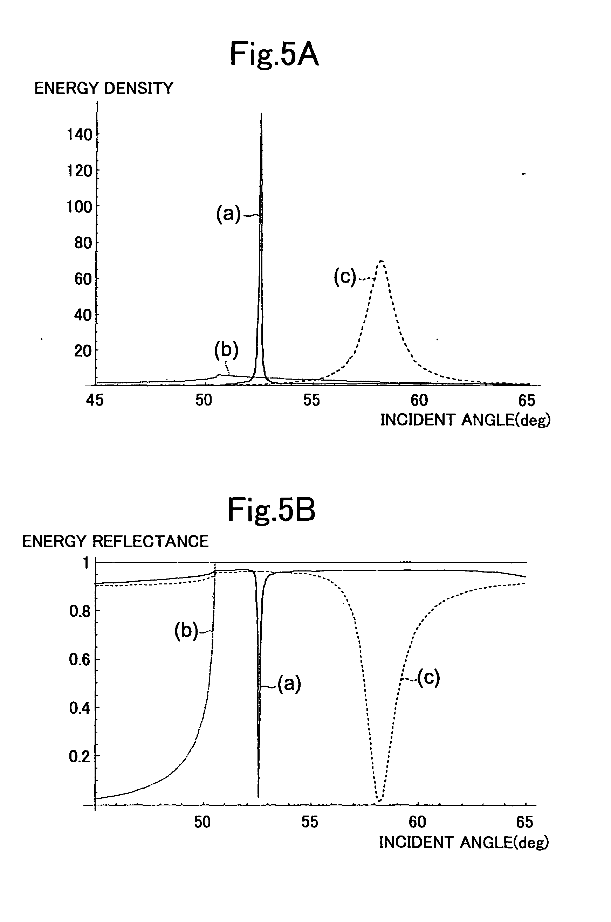

Referring to Fig. 5, the calculated result (A) of dependency of energy density upon incident angle and the calculated result (B) of dependency of energy reflectance upon incident angle on the surface of the slide glass 1 when laser light with a wavelength of 488 nm enters the system in which the slide glass 1 contacts the sample solution 3 with a refractive index of 1.35. In the respective graphs, the reference character (a) shows the calculated result of this embodiment, the reference character (b) the calculated result of ordinary total internal reflection illumination microscope without a silver thin film, and the reference character (c) the calculated result of Kretschmann arrangement without an SiO₂ film.

In accordance with this embodiment, "a specific incident angle that enables excitation of surface plasmon resonance at the interface between a metallic thin film layer and a dielectric coating layer" is in a vicinity of 525° at which the energy density reinforcement effect can be found referring to Figs. 5(A) and 5(B).

When the thickness of the SiO₂ film 7 is increased as large as a wavelength for light, multiple reflection occurs within the SiO₂ film 7. As a result, the energy density on the surface which is substantially the same as in the case that the SiO₂ film 7 is not provided can be obtained (Fig. 5(A)). Surface plasmon resonance with such multiple reflection within a dielectric coating layer is referred to as waveguide surface plasmon resonance.

It takes a long time to deposit an SiO₂ film to a thickness of 500 nm by ion beam sputtering deposition. Thus, conveniently, after a silver thin film is formed, an SiO₂ film is deposited to a thickness of a few nm within the same film-forming apparatus in order to prevent oxidation of the silver thin film under air. Then, the SiO₂ film is further formed by a sol-get method utilizing spin coating under air so as to have a total thickness of 500 nm.

Although a dielectric coating is made of a single material in the above-described embodiments, as another embodiment, the dielectric coating may be made of layers of a plurality of materials. After a silver thin layer is formed, a first dielectric layer is deposited by the same film-forming apparatus. Thereafter, a second layer and subsequent layers are formed by another film-forming apparatus.

The present invention may be used for, in addition to a total internal reflection fluorescence microscope, a detection portion for liquid chromatograpy or electrophoretic device by using the same substrate as the supporting substrate for sample solution relating to the embodiments. Furthermore, a biomolecule detection device may be structured by modifying chemical bases which interact with specific biomolecules on the surface of a substrate.

## Claims

1. A fluorescence detection method in which a sample solution (3) containing fluorescence molecules (5) is in contact with a substrate, light (4) is entered at an incident angle within the range of allowing total reflection at the interface between the substrate and the sample solution (3), and fluorescence (6) generated from the fluorescence molecules (5) excited by an evanescent field generated in a vicinity of the interface is detected, **characterized in that**
the substrate has a laminated structure of a dielectric base material layer (1), a metallic thin film layer (2) and a dielectric coating layer (7) so that the dielectric coating layer (7) contacts the sample solution (3), and
the light (4) is entered at a specific incident angle which enables excitation of surface plasmon resonance at the interface between the metallic thin film layer (2) and the dielectric coating layer (7).

2. A fluorescence detection device comprising a substrate which comes into contact with a sample solution (3) containing fluorescence molecules (5), illumination means for entering light (4) at an incident angle within the range of allowing total reflection at the interface between the substrate and the sample solution (3) and detection means for detecting fluorescence generated from the fluorescence molecules (5) excited by an evanescent field generated in a vicinity of the interface, **characterized in that**
the substrate has a laminated structure of a dielectric base material layer (1), a metallic thin film layer (2) and a dielectric coating layer (7) so that the dielectric coating layer (7) contacts the sample solution (3), and
the illumination means is set to make the light (4) enter at a specific incident angle which enables excitation of surface plasmon resonance at the interface between the metallic thin film layer (2) and the dielectric coating layer (7).

3. The fluorescence detection device according to claim 2, wherein the metallic thin film (2) is made of a material with high conductivity.

4. The fluorescence detection device according to claim 3, wherein the material with high conductivity is silver.

5. The fluorescence detection device according to claim 2, wherein the thickness of the dielectric coating layer (7) is as large as a wavelength of light entering from the illumination means so that multiple reflection occurs within the dielectric coating layer. (7)

6. The fluorescence detection device according to claim 2, wherein the illumination means comprises a semiconductor laser as an excitation light source.

7. The fluorescence detection device according to claim 2, wherein the illumination means comprises a light emitting diode as the excitation light source.

8. The fluorescence detection device according to claim 2, wherein the detection means is a CCD.

9. The fluorescence detection device according to claim 2, wherein the detection means is a photodiode.

10. A total internal reflection fluorescence microscope formed of the fluorescence detection device according to any one of claims 2 to 4.

11. A biomolecule detection device formed of the fluorescence detection device according to any one of claims 2 to 4.
